# FASCICULE DE BREVET EUROPEEN

(11) **EP 0 554 169 B1**
(45) Date de publication et mention de la délivrance du brevet: **07.05.1997**
(21) Numéro de dépôt: 93400198.3
(22) Date de dépôt: 27.01.1993
(51) Int. Cl.: B60H 1/03

(54) **Dispositif de chauffage-ventilation de l'habitacle d'un véhicule automobile à moteur à faibles rejets thermiques**
Vorrichtung für die Heizung und Lüftung des Innenraums von Motorfahrzeugen mit geringer Wärmeabgabe des Motors
Device for heating and ventilating the passenger compartment of a motor vehicle with an engine of reduced heat rejection

(30) Priorité: 31.01.1992 FR 9201107
(43) Date de publication de la demande: 04.08.1993
(73) Titulaire: VALEO CLIMATISATION, 78321 La Verrière (FR)
(72) Inventeur: Dauvergne, Jean, F-95470 Fosses (FR)
(74) Mandataire: Gamonal, Didier

(56) Documents cités:
- EP-A- 0 214 605
- DE-A- 2 451 221
- FR-A- 2 214 605
- US-A- 4 232 211

## Description

L'invention concerne un dispositif de chauffage-ventilation de l'habitacle d'un véhicule automobile à moteur à faibles rejets thermiques.

Elle s'applique ainsi aux véhicules appelés "électriques" qui sont propulsés par un moteur électrique alimenté à partir de batteries embarquées sur le véhicule. De tels véhicules électriques peuvent être entraînés par une motorisation uniquement électrique, ou encore par une motorisation mixte comportant à la fois un moteur électrique et un moteur thermique auxiliaire. Ce moteur thermique peut soit assurer l'entraînement d'un générateur pour recharger les batteries dans le cas des véhicules dits "hybrides", soit servir également à la propulsion directe du véhicule dans le cas des véhicules dits "bi-modes".

Ces véhicules à motorisation mixte sont également appelés "véhicules propres et économes" du fait que le moteur thermique auxilaire n'est pas destiné à être utilisé en parcours urbain.

Les moteurs équipant les véhicules électriques émettent de faibles rejets thermiques, généralement d'une puissance de l'ordre de quelques centaines de watts, comparativement aux moteurs thermiques des véhicules classiques qui émettent des rejets thermiques de puissance beaucoup plus élevée.

Dans les véhicules automobiles classiques, on tire profit des rejets thermiques élevés du moteur pour assurer le chauffage de l'habitacle. On utilise pour cela un radiateur de chauffage alimenté par un fluide de refroidissement du moteur et traversé par un flux d'air qui est refoulé dans l'habitacle.

Par contre, dans le cas des véhicules électriques, à motorisation purement électrique ou à motorisation mixte, les rejets thermiques émis par le moteur ont, jusqu'à présent, été considérés comme beaucoup trop faibles pour assurer le chauffage de l'habitacle. C'est la raison pour laquelle le chauffage des véhicules électriques est généralement assuré soit par un radiateur électrique, soit par un brûleur à essence.

Le radiateur électrique a pour inconvénient principal d'être alimenté à partir de la source électrique embarquée sur le véhicule, ce qui pénalise l'autonomie déjà réduite de ce type de véhicule. Quant au brûleur, il a pour inconvénients de nécessiter deux sources d'énergie différente embarquées sur le véhicule et également d'être une source de pollution.

L'invention a notamment pour but de remédier aux inconvénients ci-dessus.

C'est en particulier un but de l'invention de procurer un dispositif de chauffage de l'habitacle d'un véhicule automobile qui convient tout particulièrement aux véhicules électriques.

C'est aussi un but de l'invention de procurer un tel dispositif de chauffage qui minimise les dépenses d'énergie, tout en fournissant un niveau de confort suffisant et sans entraîner de pollution.

C'est encore un but de l'invention de procurer un tel dispositif de chauffage qui pénalise moins l'autonomie du véhicule sur lequel il est installé.

L'invention propose à cet effet un dispositif de chauffage-ventilation, du type défini en introduction, lequel comprend :
- des premiers moyens de chauffage-ventilation comprenant un premier pulseur propre à refouler un débit d'air dans une première conduite au travers d'un premier radiateur de chauffage dans lequel circule un fluide réchauffé par le moteur,
- des seconds moyens de chauffage-ventilation comprenant un second pulseur propre à refouler un débit d'air dans une seconde conduite au travers d'un second radiateur de chauffage alimenté par une source de tension électrique,
- une conduite de sortie alimentée par la première conduite et la seconde conduite et débouchant dans l'habitacle, et
- des moyens de commande pour répartir sélectivement les débits d'air refoulés respectivement par la première conduite et la seconde conduite dans la conduite de sortie.

Le dispositif de l'invention tire ainsi profit des rejets thermiques du moteur qui, s'ils sont faibles, ne sont cependant pas négligeables. L'expression "rejets thermiques du moteur", telle qu'utilisée ici, entend désigner les rejets thermiques issus non seulement du moteur lui-même mais aussi de son électronique de puissance. Les rejets thermiques ainsi récupérés sont complétés par l'énergie thermique procurée par le second radiateur de chauffage, lequel est alimenté par une source de tension électrique.

Dans une première forme de réalisation de l'invention, la première conduite et la seconde conduite du dispositif sont disposées suivant une configuration en parallèle.

En ce cas, la première conduite est avantageusement munie d'une ouverture extérieure débouchant sur l'extérieur de l'habitacle et d'une ouverture intérieure débouchant sur la conduite de sortie, le dispositif comprenant un premier volet de distribution déplaçable entre deux positions extrêmes dans lesquelles il ferme sélectivement l'ouverture extérieure ou l'ouverture intérieure de la première conduite. Ainsi, lorsque ce premier volet de distribution ferme l'ouverture extérieure, tous les rejets thermiques du moteur sont utilisés pour le chauffage de l'habitacle. Par contre, lorsque ce premier volet ferme l'ouverture intérieure, tous les rejets thermiques sont refoulés vers l'extérieur.

Dans la première forme de réalisation précitée, la seconde conduite est avantageusement munie d'une ouverture unique débouchant sur la conduite de sortie et il est prévu un second volet de distribution déplaçable entre deux positions extrêmes dans lesquelles il ferme ou ouvre sélectivement l'ouverture de la seconde conduite.

L'invention prévoit alors des moyens de synchronisation du premier volet et du second volet, de sorte que, lorsque le premier volet est en position de fermeture de l'ouverture intérieure, le second volet se trouve en position de fermeture de l'ouverture unique de la seconde conduite et que, lorsque ce premier volet est en position de fermeture de l'ouverture extérieure, le second volet peut prendre différentes positions. En outre, le premier volet peut prendre une position intermédiaire dans laquelle le second volet est alors en position de fermeture de l'ouverture unique de la seconde conduite.

Ainsi, il est possible de chauffer l'habitacle du véhicule automobile, soit à partir des premiers moyens de chauffage, soit à partir de l'ensemble des premiers et des seconds moyens de chauffage.

En variante, il est même possible, lorsque le véhicule est en stationnement, de préchauffer l'habitacle du véhicule grâce au second radiateur de chauffage qui est alors relié au secteur électrique.

Dans une seconde forme de réalisation de l'invention, la première conduite et la seconde conduite sont disposées suivant une configuration en série.

Avantageusement, la première conduite est propre à refouler un débit d'air dans le second pulseur et la seconde conduite est propre à refouler un débit d'air dans la conduite de sortie.

Ainsi, le second pulseur reçoit un débit d'air déjà préchauffé par le premier pulseur et ce débit d'air peut être chauffé davantage, si nécessaire, par le second radiateur de chauffage.

Dans cette seconde forme de réalisation de l'invention, la première conduite comporte avantageusement au moins une ouverture extérieure débouchant vers l'extérieur de l'habitacle et il est prévu alors au moins un volet propre à sélectivement fermer ou ouvrir ladite ouverture extérieure.

Lorsque ce volet ferme l'ouverture extérieure, tout le débit d'air refoulé par le premier pulseur est envoyé au second pulseur, tandis que, dans le cas où le volet est en position d'ouverture, le débit d'air refoulé par le premier pulseur est envoyé vers l'extérieur de l'habitacle.

Selon une autre caractéristique de l'invention, le second radiateur comporte des résistances à coefficient de température positif (CTP).

Avantageusement, le dispositif de l'invention comprend des moyens pour alimenter le second radiateur sélectivement à partir d'une source électrique embarquée sur le véhicule ou à partir d'une source électrique extérieure.

Dans la description qui suit, faite seulement à titre d'exemple, on se réfère aux dessins annexés, sur lesquels :
- la figure 1 représente schématiquement un dispositif de chauffage-ventilation selon la première forme de réalisation précitée ;
- la figure 2 représente schématiquement un dispositif de chauffage-ventilation selon la seconde forme de réalisation précitée ;
- la figure 3 est un diagramme représentant la puissance thermique nécessaire au chauffage de l'habitacle d'un véhicule automobile en fonction de la température extérieure ;
- la figure 4 représente une courbe montrant la puissance thermique générée par les premiers moyens de chauffage en fonction de la température extérieure et de la position des volets ; et
- la figure 5 représente une courbe montrant la puissance thermique générée par les seconds moyens de chauffage du dispositif de la figure 1, en fonction de la température extérieure et de la position des volets.

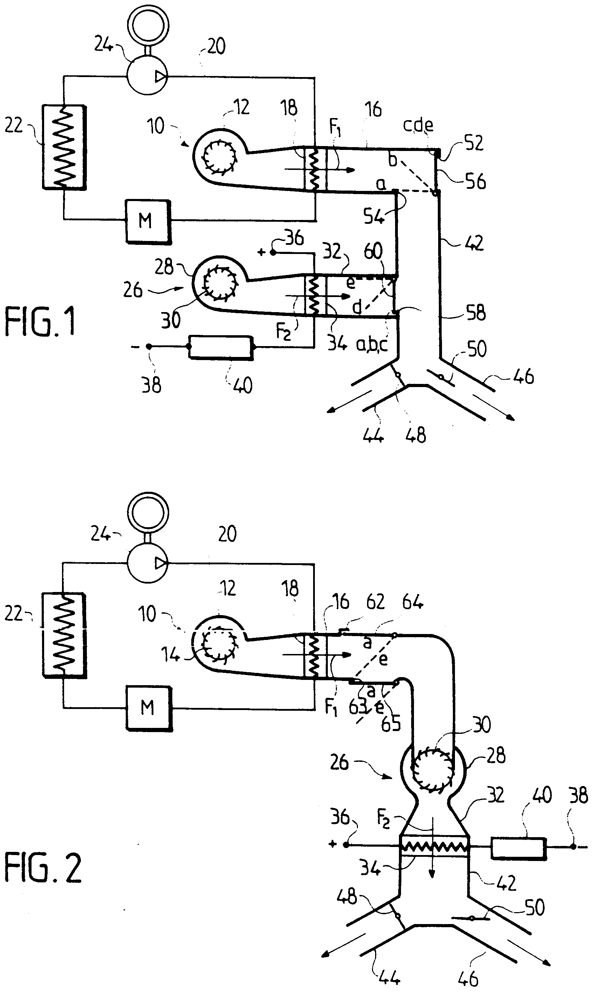

Le dispositif de chauffage-ventilation représenté à la figure 1 est destiné à équiper un véhicule du type défini précédemment comportant un moteur électrique M à faibles rejets thermiques. Le dispositif comprend des premiers moyens de chauffage 10 constitués, pour l'essentiel, d'un premier pulseur 12 propre à aspirer de l'air extérieur et à le refouler, au moyen d'une turbine 14, dans une première conduite 16 au travers d'un premier radiateur de chauffage 18, comme représenté par la flèche F1.

Le radiateur 18 est propre à être parcouru par un fluide chaud, par exemple de l'eau, qui sert au refroidissement du moteur M et de son électronique de commande (non représentée) et qui circule dans une boucle 20 en circuit fermé. Cette bouche 20 comprend en outre un échangeur 22 servant au refroidissement du moteur et de son électronique de commande ainsi qu'une motopompe 24 servant à la circulation du fluide chaud dans la boucle 20.

Le dispositif comprend en outre des seconds moyens de chauffage-ventilation 26 constitués, pour l'essentiel, d'un pulseur 28 propre à admettre de l'air extérieur et à le refouler, au moyen d'une turbine 30, dans une seconde conduite 32, au travers d'un second radiateur de chauffage 34, comme indiqué par la flèche F2.

Le second radiateur 34 comporte au moins une résistance électrique susceptible d'être reliée au pôle positif 36 et au pôle négatif 38 d'une source de tension électrique, au travers d'un variateur 40. Ce dernier permet de moduler la puissance de chauffage du radiateur 34 et également de couper ce radiateur et faire fonctionner le pulseur 28, uniquement pour la ventilation en saison chaude.

La source électrique alimentant le radiateur 34 est constituée par des batteries embarquées sur le véhicule automobile. Il est possible de prévoir également des moyens permettant d'alimenter le radiateur 34 à partir d'une source électrique extérieure lorsque le véhicule est à l'arrêt et cela pour permettre d'assurer un préchauffage de l'habitacle.

Dans la forme de réalisation de la figure 1, les conduites 16 et 32 sont disposées suivant une configuration en parallèle et débouchent dans une conduite commune 42. Cette dernière possède, dans l'exemple, deux bouches de sortie 44 et 46 propres à communiquer avec l'habitacle du véhicule et contrôlées respectivement par deux volets de répartition 48 et 50.

La conduite 16 comporte une ouverture extérieure 52 qui débouche sur l'extérieur de l'habitacle et une ouverture intérieure 54 qui débouche sur la conduite de sortie commune 42. Il est prévu un premier volet de distribution 56 déplaçable entre deux positions extrêmes dans lesquelles il ferme sélectivement l'ouverture extérieure 52 (positions c, d et e en trait plein) ou l'ouverture intérieure 54 (position a en trait interrompu). Le volet 56 peut également prendre au moins une position intermédiaire (position b représentée en trait interrompu).

La seconde conduite 32 débouche dans la conduite commune 42 au travers d'une ouverture unique 58 qui est contrôlée par un second volet de distribution 60. Ce second volet est déplaçable entre deux positions extrêmes : une position de fermeture (positions a, b et c représentées en trait plein) et une position d'ouverture (position e en trait interrompu). Il peut en outre prendre au moins une position intermédiaire (position d en trait interrompu) entre les deux positions extrêmes précitées.

Le dispositif de la figure 1 fonctionne de la façon suivante.

En saison chaude, c'est-à-dire pour une température extérieure supérieure à environ 20°C, le volet 56 ferme l'ouverture intérieure 54 (position a) et le volet 60 ferme également l'ouverture 58 (position a), le radiateur électrique 34 n'étant pas alimenté. Les rejets thermiques du moteur sont alors dissipés vers l'extérieur au travers de l'ouverture extérieure 52.

Si la température extérieure baisse pour atteindre une valeur de l'ordre de 15°C, le volet 56 est déplacé en position intermédiaire (position b), le volet 60 étant toujours en position de fermeture (position b) et le radiateur 34 n'étant pas alimenté. Il en résulte qu'une partie des rejets thermiques du moteur est envoyée vers l'extérieur, tandis qu'une autre partie est envoyée dans la conduite commune 42 et, de là, dans l'habitacle.

Si la température extérieure baisse encore pour atteindre une valeur de l'ordre de 10°C, le volet 56 est placé dans la position de fermeture de l'ouverture extérieure 52 (position c), le volet 60 étant toujours en position de fermeture (position c) et le radiateur 34 n'étant toujours pas alimenté. Dans ce cas, tous les rejets thermiques du moteur sont envoyés dans la conduite commune et, ensuite, dans l'habitacle.

Dans ces cas, l'apport d'air frais extérieur ou la ventilation de l'habitacle peut être obtenu par l'ouverture du volet 60, en position e, qui ouvre l'ouverture 58 et la mise en fonctionnement éventuelle du pulseur 28, le radiateur étant fermé.

Lorsque la température extérieure baisse encore pour atteindre une valeur de l'ordre de -5°C, les rejets thermiques du moteur sont, en principe, insuffisants pour assurer un confort adéquat dans l'habitacle. Il faut alors apporter une énergie thermique supplémentaire au moyen du radiateur électrique 34. On place alors le volet 60 dans une position intermédiaire (position d) et on module la puissance du radiateur 34 au moyen du variateur 40.

Si la température extérieure baisse davantage pour atteindre, par exemple, une valeur de l'ordre de -20°C, on place le volet 60 en position d'ouverture complète (position e), tout en modulant toujours la puissance électrique du radiateur 34 au moyen du variateur 40. Dans le cas où le volet 60 est dans les positions d et e, le volet 56 reste, bien entendu, en position de fermeture de l'ouverture 52 pour que tout l'air refoulé par le premier pulseur 12 soit admis dans la conduite commune 42.

Les valeurs de température qui ont été données ci-dessus, en correspondance des différentes positions (a, b, c, d et e) des volets 56 et 60 sont données seulement à titre d'exemple et dépendent évidemment à chaque fois du véhicule considéré et du moteur qui l'entraîne.

Dans la forme de réalisation de la figure 2, à laquelle on se réfère maintenant, les éléments communs avec ceux du dispositif de la figure 1, sont désignés par les mêmes références numériques.

Le dispositif de la figure 2 diffère essentiellement de celui de la figure 1 par le fait que les conduites 16 et 32 sont disposées suivant une configuration en série et non pas en parallèle.

Ainsi, la première conduite 16 est propre à refouler le débit d'air issu du premier pulseur 12 (flèche F1), directement dans le second pulseur 24. Ce dernier refoule ensuite un débit d'air (flèche F2) dans la conduite de sortie 32 qui est traversée par le radiateur 34 et qui alimente ensuite la conduite de sortie commune 42.

La première conduite 16 comporte deux ouvertures extérieures 62,63 débouchant toutes deux vers l'extérieur de l'habitacle et il est prévu en outre deux volets correspondants 64,65 propres à sélectivement fermer ou ouvrir les ouvertures 62,63. Chaque volet 64,65 peut prendre une position de fermeture de l'ouverture 62,63 correspondante (position a représentée en trait plein) ou une position e d'ouverture de l'ouverture 62,63 correspondante (position représentée en trait interrompu).

Dans la position de fermeture des volets 64,65, tout le débit d'air refoulé par le pulseur 12 est envoyé au pulseur 28. Par contre, dans la position d'ouverture e des volets 64,65, le débit d'air refoulé par le pulseur 12 est envoyé vers l'extérieur de l'habitacle à travers l'ouverture 62, l'ouverture 63 servant à la ventilation et/ou à l'apport d'air frais extérieur dans l'habitacle.

Ainsi, lorsque la température extérieure est suffisamment élevée, les volets 64 sont amenés en position d'ouverture et les rejets thermiques du moteur sont envoyés vers l'extérieur par l'ouverture 62. La ventilation et/ou l'apport d'air frais extérieur peut être alors obtenu par l'ouverture 63, avec la mise en fonctionnement du pulseur 30, le radiateur 34 étant fermé. Par contre, dès que la température extérieure baisse et atteint par exemple une valeur de l'ordre de 15°C, les volets 64 sont amenés dans la position de fermeture. Le débit d'air chaud refoulé par le pulseur 12 est alors envoyé au pulseur 29 et, de là, vers la conduite commune 42. Si nécessaire, la température de cet air chaud peut être augmenté davantage en faisant intervenir le radiateur électrique 34 dont la puissance peut être modulée grâce au variateur 40.

Dans l'une ou l'autre des formes de réalisations précitées, le radiateur électrique 34 est avantageusement un radiateur possédant une ou plusieurs résistances à coefficient de température positif (CTP). Il s'agit de résistances dont la résistivité varie très fortement en fonction de la température, à la différence des résistances classiques dont la résistivité est pratiquement constante, quelle que soit la température. L'utilisation d'un radiateur de chauffage à résistances CTP permet d'adapter la puissance électrique consommée à la puissance thermique désirée, et cela sans moyen de contrôle supplémentaire. On connaît déjà, par exemple d'après le document EP-A-204393, un appareil de chauffage domestique comportant des résistances de ce type.

Ainsi, grâce à l'invention, on peut tirer profit des rejets thermiques du moteur du véhicule et apporter, si nécessaire, une puissance thermique complémentaire par le radiateur électrique.

Comme déjà indiqué, il est possible également de préchauffer le véhicule lorsque celui-ci est à l'arrêt, en alimentant le radiateur électrique à partir du secteur. Ceci a pour avantage de pouvoir préchauffer l'habitacle par des moyens électriques et cela, sans prélever d'énergie sur la source électrique embarquée sur le véhicule. Ce préchauffage peut être déclenché par exemple au moyen d'un programmateur (non représenté).

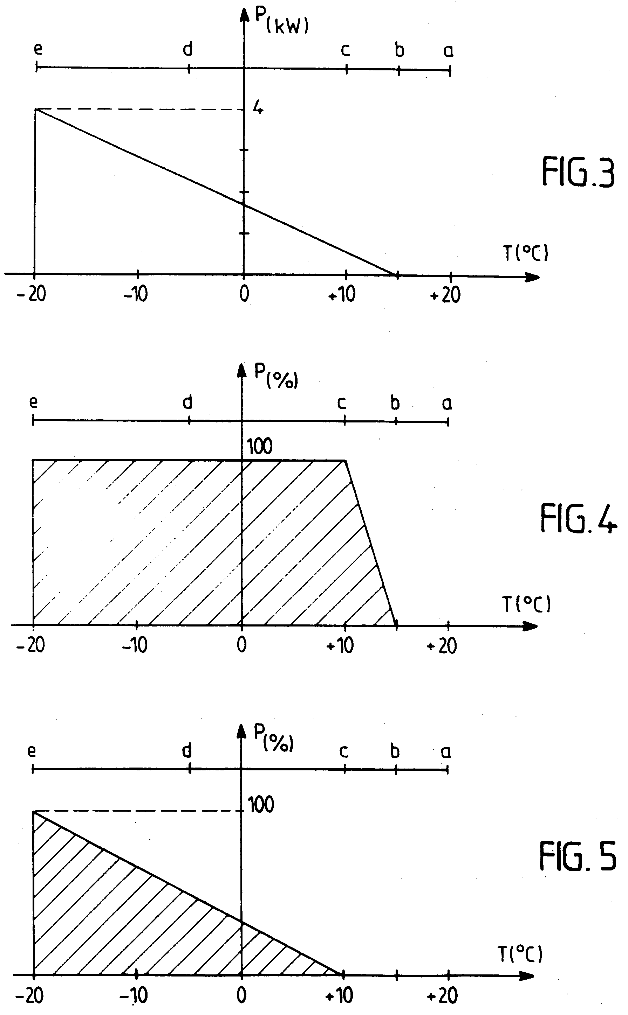

La figure 3, à laquelle on se réfère maintenant, représente les variations de la puissance thermique (exprimée en kW) nécessaire à l'habitacle d'un véhicule donné et cela, en fonction de la température extérieure exprimée en °C.

Dans l'exemple représenté, cette puissance thermique est de 4 KW pour une température extérieure de -20°C et elle diminue ensuite de façon linéaire pour atteindre une valeur nulle lorsque la température extérieure est de 15°C. On a représenté également sur la figure A les positions a, b, c, d et e des volets, mentionnées plus haut.

Dans cet exemple particulier, où la puissance thermique maximale est de 4 KW, les rejets thermiques du moteur M peuvent procurer une puissance maximale de 500 W et le radiateur électrique peut procurer une puissance maximale de 3500 W.

Comme le montre la figure 4, à laquelle on se réfère maintenant, lorsque le volet 56 ferme l'ouverture extérieure 52 (positions c, d, e), on refoule vers l'habitacle la totalité des rejets thermiques, c'est-à-dire 100 % de la puissance maximale de 500 W.

Ensuite, à partir du moment où l'on fait pivoter le volet 56 pour passer de la position de fermeture de l'ouverture 52 (position c) jusqu'à la position de fermeture de l'ouverture 54 (position a), la puissance rejetée vers l'habitacle diminue progressivement et de façon linéaire. Lorsque le volet 56 est dans la position a, ce qui correspond à une température extérieure de l'ordre de 15°C, l'habitacle ne reçoit aucun rejet thermique du moteur, ces derniers étant expulsés vers l'extérieur.

Comme montré sur la figure 5, à laquelle on se réfère maintenant, le radiateur 34 procure une puissance maximale, c'est-à-dire 100 % de 3500 W, lorsque le volet 60 est en position d'ouverture (position e). Cette puissance diminue de façon linéaire à mesure que le volet se déplace pour atteindre la position de fermeture (position c). Dans l'exemple représenté, dès que la température extérieure dépasse 10°C, le radiateur électrique 34 n'est plus alimenté.

Le dispositif de chauffage-ventilation de l'invention permet ainsi de procurer un chauffage suffisant de l'habitacle d'un véhicule automobile électrique en économisant au maximum l'énergie stockée sur le véhicule, sans pénaliser l'autonomie de celui-ci.

## Revendications

1. Dispositif de chauffage-ventilation de l'habitacle d'un véhicule automobile à moteur à faibles rejets thermiques comprenant des premiers moyens de chauffage-ventilation (10) comprenant une première conduite (16) comportant un premier radiateur de chauffage (18) dans lequel circule un fluide réchauffé par le moteur (M), des seconds moyens de chauffage-ventilation comprenant une seconde conduite (32) comportant un second radiateur de chauffage (34) alimenté par une source de tension électrique (36, 38), et une conduite de sortie (42) alimentée par la première conduite (16) et la seconde conduite (32) et débouchant dans l'habitacle, caractérisé en ce que le dispositif comprend, en outre, un premier pulseur (12) propre à refouler un débit d'air dans la première conduite (16) au travers du premier radiateur (18), un second pulseur (28) propre à refouler un débit d'air dans la seconde conduite (32) au travers du second radiateur (34) et des moyens de commande (56, 60, 64) pour répartir sélectivement les débits d'air refoulés respectivement par la première conduite et la seconde conduite dans la conduite de sortie (42).

2. Dispositif selon le revendication 1, caractérisé en ce que la première conduite (16) et la seconde conduite (32) sont disposées suivant une configuration en parallèle.

3. Dispositif selon la revendication 2, caractérisé en ce que la première conduite (16) est munie d'une ouverture extérieure (52) débouchant sur l'extérieur de l'habitacle et d'une ouverture intérieure (54) débouchant sur la conduite de sortie (42) et en ce qu'il est prévu un premier volet de distribution (56) déplaçable entre deux positions extrêmes dans lesquelles il ferme sélectivement l'ouverture extérieure (52) ou l'ouverture intérieure (54) de la première conduite (16).

4. Dispositif selon l'une des revendications 2 et 3, caractérisé en ce que la seconde conduite (32) est munie d'une ouverture unique (58) débouchant dans la conduite de sortie commune (42) et en ce qu'il est prévu un second volet de distribution (60) déplaçable entre deux positions extrêmes dans lesquelles il ferme ou ouvre sélectivement l'ouverture (58) de la seconde conduite (32).

5. Dispositif selon l'ensemble des revendications 3 et 4, caractérisé en ce qu'il comprend des moyens de synchronisation du premier volet (56) et du second volet (60), de sorte que, lorsque le premier volet (56) est en position de fermeture de l'ouverture intérieure (54), le second volet (60) est en position de fermeture de l'ouverture unique (58) de la seconde conduite (32), que, lorsque le premier volet (56) est en position de fermeture de l'ouverture extérieure (52), le second volet (60) peut prendre différentes positions et que le premier volet (56) peut prendre une position intermédiaire, lorsque le second volet (60) est en position de fermeture de l'ouverture (58) de la seconde conduite (32).

6. Dispositif selon l'ensemble des revendications 3 et 4, caractérisé en ce qu'il comprend des moyens de synchronisation du premier volet (56) et du second volet (60), de sorte que, lorsque le premier volet (56) est en position de fermeture de l'ouverture intérieure (54) ou de l'ouverture extérieure (52), le second volet (60) peut prendre différentes positions et que lorsque le premier volet (56) est dans une position intermédiaire, le second volet (60) peut prendre différentes positions.

7. Dispositif selon la revendication 1, caractérisé en ce que la première conduite (16) et la seconde conduite (32) sont disposées suivant une configuration en série.

8. Dispositif selon la revendication 7, caractérisé en ce que la première conduite (16) est propre à refouler un débit d'air dans le second pulseur (28) et en ce que la seconde conduite (32) est propre à refouler un débit d'air dans la conduite de sortie (42).

9. Dispositif selon la revendication 8, caractérisé en ce que la première conduite (16) comporte au moins une ouverture extérieure (62,63) débouchant vers l'extérieur de l'habitacle et en ce qu'il est prévu au moins un volet (64,65) propre à sélectivement fermer ou ouvrir ladite ouverture extérieure.

10. Dispositif selon l'une des revendications 1 à 9, caractérisé en ce que le second radiateur (34) est un radiateur à résistances à coefficient de température positif (CTP).

11. Dispositif selon l'une des revendications 1 à 10, caractérisé en ce qu'il comprend des moyens pour alimenter le second radiateur (34) sélectivement à partir d'une source électrique embarquée sur le véhicule ou à partir d'une source électrique fixe.

## Claims

1. Heating and ventilating apparatus, for the cabin of a motor vehicle having a propulsion motor with low heat loss, including first heating and ventilating means (10) comprising a first duct (16) which includes a first heating radiator (18), in which a fluid heated by the motor (M) flows, second heating and ventilating means comprising a second duct (32) which includes a second heating radiator (34) powered by an electrical voltage source (36, 38), and a delivery duct (42), fed through the first duct (16) and the second duct (32) and exhausting into the cabin, characterised in that the apparatus further includes a first blower (12) adapted to deliver an air stream into the first duct (16) through the first radiator (18), a second blower (28) adapted to deliver an air stream into the second duct (32) through the second radiator (34), and control means (56, 60, 64) for selectively distributing the air streams which are passed into the delivery duct (42) through the first duct and the second duct respectively.

2. Apparatus according to Claim 1, characterised in that the first duct (16) and the second duct (32) are arranged in a parallel configuration.

3. Apparatus according to Claim 2, characterised in that the first duct (16) is provided with an external port (52) which is open on the outside of the cabin, together with an internal port (54) which is open into the delivery duct (42), and in that a first distribution flap valve (56) is provided, which is movable between two extreme positions in which it selectively closes the external port (52) or the internal port (54) of the first duct (16).

4. Apparatus according to Claim 2 or Claim 3, characterised in that the second duct (32) is provided with a single port (58) which is open into the common delivery duct (42), and in that a second distribution flap valve (60) is provided, which is movable between two extreme positions in which it selectively opens or closes the port (58) of the second duct (32).

5. Apparatus according to Claims 3 and 4 in combination, characterised in that it includes means for synchronising the first valve (56) and the second valve (60) in such a way that, when the first valve (56) is in the position in which it closes the internal port (54), the second valve (60) is in the position in which it closes the single port (58) of the second duct (32), that when the first valve (56) is in the position in which it closes the external port (52), the second valve (60) is able to assume various positions, and that the first valve (56) is able to assume an intermediate position when the second valve (60) is in the position in which it closes the port (58) of the second duct (32).

6. Apparatus according to Claims 3 and 4 in combination, characterised in that it includes means for synchronising the first valve (56) and the second valve (60), in such a way that when the first valve (56) is in the position in which it closes the internal port (54) or the external port (52), the second valve (60) is able to assume various positions, and that, when the first valve (56) is in an intermediate position, the second valve (60) is able to assume various positions.

7. Apparatus according to Claim 1, characterised in that the first duct (16) and the second duct (32) are arranged in a series configuration.

8. Apparatus according to Claim 7, characterised in that the first duct (16) is adapted to pass an air stream into the second blower (28), and in that the second duct (32) is adapted to pass an air stream into the delivery duct (42).

9. Apparatus according to Claim 8, characterised in that the first duct (16) has at least one external port (62, 63) open to the outside of the cabin, and in that at least one flap valve (64, 65) is provided which is adapted for the selective opening or closing of the said external port.

10. Apparatus according to one of Claims 1 to 9, characterised in that the second radiator (34) is a radiator having positive temperature coefficient (CTP) resistances.

11. Apparatus according to one of Claims 1 to 10, characterised in that it includes means for supplying power to the second radiator (34) selectively from an electrical source on board the vehicle or from a fixed electrical source.

## Patentansprüche

1. Vorrichtung für die Heizung und Lüftung des Innenraums von Motorfahrzeugen mit geringer Wärmeabgabe des Motors, mit ersten Heizungs- und Lüftungsmitteln (10), zu denen eine erste Leitung (16) mit einem ersten Heizradiator (18) gehört, in dem ein durch den Motor (M) erhitztes Strömungsmedium zirkuliert, zweiten Heizungs- und Lüftungsmitteln, zu denen eine zweite Leitung (32) mit einem zweiten Heizradiator (34) gehört, der durch eine elektrische Spannungsquelle (36, 38) gespeist wird, und einer Auslaßleitung (42), die durch die erste Leitung (16) und die zweite Leitung (32) gespeist wird und die in den Innenraum mündet , **dadurch gekennzeichnet**, daß die Vorrichtung außerdem ein erstes Gebläse (12), um einen Luftdurchsatz in die erste Leitung (16) durch den ersten Radiator (18) zu fördern, ein zweites Gebläse (28), um einen Luftdurchsatz in die zweite Leitung (32) durch den zweiten Radiator (34) zu fördern, und Steuermittel (56, 60, 64) umfaßt, um wahlweise die Luftdurchsätze zu verteilen, die durch die erste Leitung bzw. durch die zweite Leitung in die Auslaßleitung (42) gefördert werden.

2. Vorrichtung nach Anspruch 1 , **dadurch gekennzeichnet,** daß die erste Leitung (16) und die zweite Leitung (32) in einer Parallelkonfiguration angeordnet sind.

3. Vorrichtung nach Anspruch 2 , **dadurch gekennzeichnet,** daß die erste Leitung (16) mit einer äußeren Öffnung (52), die außerhalb des Innenraums mündet, und mit einer inneren Öffnung (54) versehen ist, die in die Auslaßleitung (42) mündet, und daß eine erste Verteilerklappe (56) vorgesehen ist, die zwischen zwei Endpositionen verstellbar ist, in denen sie wahlweise die äußere Öffnung (52) oder die innere Öffnung (54) der ersten Leitung (16) schließt.

4. Vorrichtung nach einem der Ansprüche 2 und 3, **dadurch gekennzeichnet,** daß die zweite Leitung (32) mit einer einzigen Öffnung (58) versehen ist, die in die gemeinsame Auslaßleitung (42) mündet, und daß eine zweite Verteilerklappe (60) vorgesehen ist, die zwischen zwei Endpositionen verstellbar ist, in denen sie die Öffnung (58) der zweiten Leitung (32) wahlweise öffnet oder schließt.

5. Vorrichtung nach den beiden Ansprüchen 3 und 4, **dadurch gekennzeichnet,** daß sie Synchronisiermittel für die erste Klappe (56) und die zweite Klappe (60) umfaßt, so daß sich die zweite Klappe (60), wenn sich die erste Klappe (56) in der Position zur Schließung der inneren Öffnung (54) befindet, in der Position zur Schließung der einzigen Öffnung (58) der zweiten Leitung (32) befindet, daß die zweite Klappe (60), wenn sich diese erste Klappe (56) in der Position zur Schließung der äußeren Öffnung (52) befindet, verschiedene Positionen einnehmen kann und daß die erste Klappe (56) eine Zwischenposition einnehmen kann, wenn sich die zweite Klappe (60) in der Position zur Schließung der Öffnung (58) der zweiten Leitung (32) befindet.

6. Vorrichtung nach den beiden Ansprüchen 3 und 4, **dadurch gekennzeichnet,** daß sie Synchronisiermittel für die erste Klappe (56) und die zweite Klappe (60) umfaßt, so daß die zweite Klappe (60), wenn sich die erste Klappe (56) in der Position zur Schließung der inneren Öffnung (54) oder der äußeren Öffnung (52) befindet, verschiedene Positionen einnehmen kann und daß die zweite Klappe (60), wenn sich die erste Klappe (56) in einer Zwischenposition befindet, verschiedene Positionen einnehmen kann.

7. Vorrichtung nach Anspruch 1 , **dadurch gekennzeichnet,** daß die erste Leitung (16) und die zweite Leitung (32) in einer Reihenkonfiguration angeordnet sind.

8. Vorrichtung nach Anspruch 7 , **dadurch gekennzeichnet,** daß die erste Leitung (16) einen Luftdurchsatz in das zweite Gebläse (28) fördern kann und daß die zweite Leitung (32) einen Luftdurchsatz in die Auslaßleitung (42) fördern kann.

9. Vorrichtung nach Anspruch 8 , **dadurch gekennzeichnet,** daß die erste Leitung (16) mindestens eine äußere Öffnung (62, 63) umfaßt, die außerhalb des Innenraums mündet, und daß mindestens eine Klappe (64, 65) vorgesehen ist, um die besagte äußere Öffnung wahlweise zu öffnen oder zu schließen.

10. Vorrichtung nach einem der Ansprüche 1 bis 9, **dadurch gekennzeichnet,** daß der zweite Radiator (34) ein Radiator mit Widerständen mit positivem Temperaturkoffizienten (PTK) ist.

11. Vorrichtung nach einem der Ansprüche 1 bis 10, **dadurch gekennzeichnet,** daß sie Mittel umfaßt, um den zweiten Radiator (34) wahlweise durch eine an Bord des Fahrzeugs installierte Stromquelle oder durch eine ortsfeste Stromquelle zu speisen.
